Europäisches Patentamt

European Patent Office

Office européen des brevets

(19)

(11) **EP 0 874 250 B1**

(12) **FASCICULE DE BREVET EUROPEEN**

(45) Date de publication et mention
de la délivrance du brevet:
**18.06.2003 Bulletin 2003/25**

(51) Int Cl.⁷: **G01S 13/78**

(21) Numéro de dépôt: **98400975.3**

(22) Date de dépôt: **21.04.1998**

(54) **Procédé de traitement des trajets multiples et dispositif pour sa mise en oeuvre**

Verfahren zum Bearbeiten von Mehrwegechos und Vorrichtung dafür

Method for processing multipath and related device

(84) Etats contractants désignés:
**DE FR GB IT SE**

(30) Priorité: **24.04.1997 FR 9705156**

(43) Date de publication de la demande:
**28.10.1998 Bulletin 1998/44**

(73) Titulaire: **Thales**
**75008 Paris (FR)**

(72) Inventeurs:
• **Maurice, Alain**
  **94117 Arcueil Cedex (FR)**
• **Fleury, Christian**
  **94117 Arcueil Cedex (FR)**
• **Rozec, Jean-Noel**
  **94117 Arcueil Cedex (FR)**

(56) Documents cités:
**US-A- 5 463 398          US-A- 5 528 244**

## Description

La présente invention concerne le traitement des trajets multiples dans les radars, dans les altimètres, et dans les émetteurs-recépteurs IFF ainsi appelés d'après le sigle des mots anglais « identification friend or foe » qui signifient identification ami-ennemi. La présente invention se situe plus précisément dans le cadre d'une réception avec antenne à au moins deux voies de réception.

Le problème est d'éliminer les signaux d'échos c'est-à-dire ceux obtenus par trajet multiple, afin de ne conserver que les signaux reçus en ligne directe, dits signaux directs. Différentes techniques sont connues pour cela.

La moins coûteuse de ces techniques connues, mais aussi la moins performante, consiste à rendre le récepteur « aveugle » dès qu'un signal a été reçu et cela pendant une durée prédéterminée ; mais cette technique n'est pas applicable si les divers signaux reçus sont proches les uns des autres.

Une deuxième technique consiste à exploiter une cohérence Doppler quand chacun des dispositifs d'émission et de réception le permettent : la cohérence de l'évolution de la phase du signal impulsionnel électromagnétique en sous-porteuse est mesurée au cours de la répétition des récurrences d'émission ; les mesures en amplitude et phase des signaux présents après détection conduisent alors à discriminer les échos, c'est-à-dire les signaux indirects en fonction de l'étalement spectral. Mais si cette technique est utilisable, par exemple en radar Doppler cohérent, elle ne l'est pas avec les émetteurs IFF où il manque une référence de phase.

Une troisième technique encore meilleure que la deuxième, consiste à éliminer les signaux indirects par la méthode dite de l'angle complexe, complex angle dans la littérature anglo-saxonne, mais cette technique qui nécessite, pour donner de bons résultats, trois voies de réception est coûteuse.

Le but de la présente invention est de proposer une technique moins coûteuse, dans sa réalisation, que la troisième technique ci-avant mais tout aussi performante que la deuxième.

Ceci est obtenu, pour un procédé selon la deuxième technique, par une recherche de cohérence, mais sans notion de phase.

Selon l'invention, il est proposé un procédé de traitement des trajets multiples dans un poste émetteur-récepteur conçu pour envoyer des salves d'interrogations récurrentes et recevoir sur n voies distinctes, avec n entier supérieur à 1, suite à une interrogation donnée, des réponses sous forme d'éléments faits au moins d'une impulsion, pendant un laps de temps donné, dit récurrence, dont l'origine des temps est l'instant d'émission de l'interrogation donnée et dont la durée est l'intervalle de temps entre deux interrogations successives dans la salve, caractérisé en ce que, relativement à chaque salve, il consiste à considérer les seules récurrences où chaque élément reçu est repéré sans ambiguïté, à ne retenir que la première d'entre elles et, parmi les suivantes, que celles ayant le même nombre d'éléments que la première à effectuer un classement par ordre d'apparition des éléments dans les récurrences retenues, à effectuer une mesure de l'énergie de chaque élément ramenée à la durée totale des impulsions de l'élément, à calculer une dispersion des énergies, du genre variance normalisée, sur l'ensemble des éléments de même classement et cela pour chaque voie, à comparer les dispersions pour ne considérer comme valable que le premier élément du classement et, parmi les autres éléments du classement, que ceux qui ont, sur l'ensemble des n voies, des dispersions similaires à celles du premier.

Selon l'invention il est également proposé un dispositif pour la mise en oeuvre du procédé décrit dans le paragraphe précédent.

La présente invention sera mieux comprise et d'autres caractéristiques apparaîtront à l'aide de la description ci-après et des figures annexées qui sont :

- la figure 1, une vue schématique représentant un fonctionnement IFF avec un trajet hertzien direct et un trajet hertzien réfléchi,
- les figures 2a et 2b, des représentations vectorielles relatives aux trajets direct et réfléchi de la figure 1,
- la figure 3, un schéma électrique d'un circuit dont les signaux de sortie peuvent être traités selon l'invention,
- la figure 4, un diagramme des temps relatif à un signal à traiter selon l'invention,
- la figure 5, un schéma électrique d'un dispositif de traitement selon l'invention.

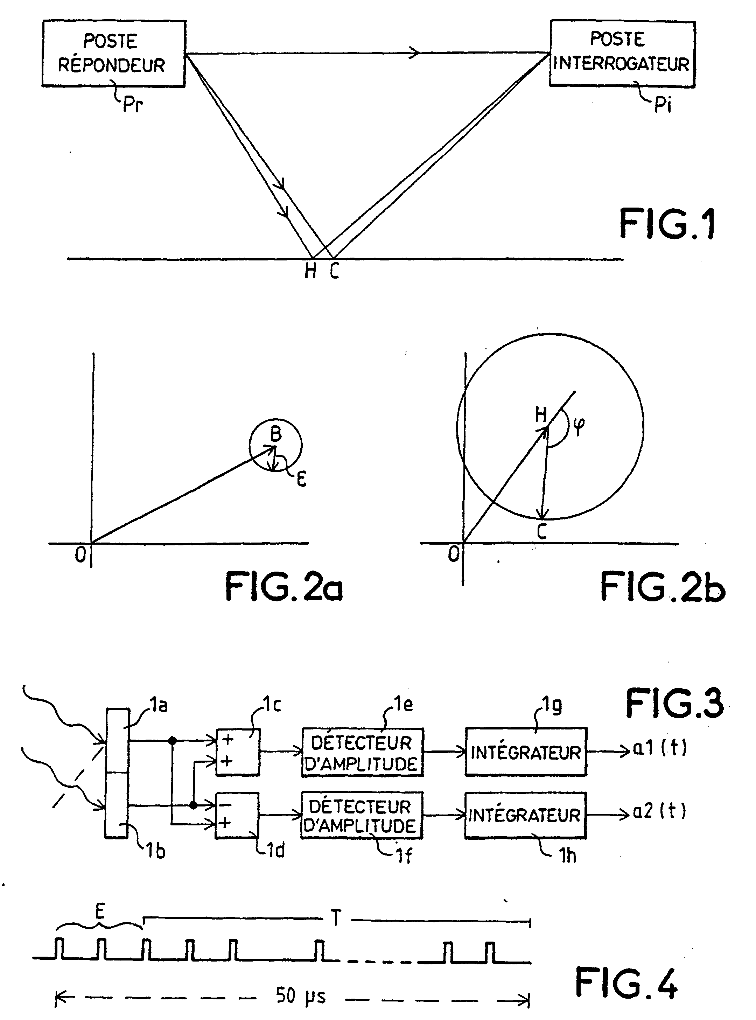

La figure 1 représente un poste interrogateur Pi et un poste répondeur Pr d'un système IFF, au moment où le poste répondeur envoie une réponse à une interrogation qu'il vient de recevoir du poste interrogateur. Il est supposé que la réponse parvient au poste récepteur suivant deux trajets hertziens : un trajet direct et un trajet réfléchi qui sera dit trajet indirect. Or il s'avère qu'un trajet indirect se forme avec plusieurs éléments réfléchissants ponctuels et que la « source » du trajet indirect est en fait un ensemble de points réfléchissants. Dans le cas de la figure 1, il a été supposé que cet ensemble de points était situé au niveau du sol et réduit à deux points H et C.

Les figures 2a et 2b sont une représentation, dans le plan de Fresnel, des éléments d'énergie captés par le poste interrogateur Pi, respectivement pour le trajet direct et pour le trajet indirect ; il est à noter que, dans ces éléments d'énergie obtenus par échantillonnage du signal capté, intervient le bruit thermique propre au poste.

Dans le cas du trajet direct, figure 2a, l'élément d'énergie est la somme d'une énergie utile, OB, et d'une énergie ε, représentative du bruit thermique ; cette dernière énergie peut être considérée comme une composante gaussienne centrée, ayant une amplitude qui relève d'un statistique stationnaire dont tout estimateur mathématique, tel une variance, converge vers une valeur centrale limite quand le nombre de mesures, et donc la largeur de la fenêtre de mesure, croît.

Dans le cas du trajet indirect il apparaît, sans même tenir compte du bruit thermique propre au récepteur, que les contributions des divers points réfléchissants, tels que H et C, à l'élément d'énergie du signal indirect sont deux énergies utiles, OH, HC, mais déphasées d'un angle φ l'une par rapport à l'autre ; par énergie utile, il faut comprendre énergie porteuse de l'information attendue. Le déphasage φ est fonction des variations, en particulier des positions des éléments réfléchissants les uns par rapport aux autres, c'est-à-dire qu'il est fonction de perturbations mécaniques ; ainsi la variation de φ pendant une fenêtre est différente de celle pendant une autre fenêtre et cela de façon « aléatoire, variable dans le temps » si bien que, quelle que soit la largeur de la fenêtre de mesure, le résultat que fournira un estimateur mathématique, tel une variance, dépendra de l'instant choisi pour ouvrir la fenêtre ; cette dépendance relève des statistiques non stationnaires.

C'est cette différence de constitution entre le signal direct et le signal indirect qui est mise à profit dans ce qui suit pour éliminer les signaux parasites, c'est-à-dire les signaux indirects, en calculant la dispersion des données de mesure à l'aide d'un estimateur mathématique et en comparant entre eux les résultats obtenus. Le premier signal reçu étant par hypothèse un signal direct, sert alors de référence pour les signaux suivants, et ainsi de suite à chaque salve de signaux d'interrogation.

L'exemple de réalisation qui va être décrit se rapporte aux signaux IFF mais peut très facilement se transposer à la technique des signaux radar. Dans cet exemple, les signaux IFF à traiter sont des signaux émis en réponse à des salves de 16 interrogations régulièrement espacées de 2,5 ms. Et ces signaux sont faits d'éléments d'information d'une durée de 50 µs comportant des impulsions ou bits qui composent un protocole préliminaire ou en-tête, suivi de 16 positions dans chacune desquelles peut se trouver une impulsion ; les impulsions contenues dans ces 16 positions constituant les informations proprement dites. Dans le récepteur du poste interrogateur les 16 récurrences formées par les espaces de 2,5 ms suivant chaque interrogation sont échantillonnés à 4 MHz pour définir 5000 cases distance dans une récurrence, à partir de l'instant d'interrogation relatif à la récurrence considérée.

Le poste interrogateur, Pi, dont il a été question plus avant est un poste émetteur-récepteur dont la partie réception comporte deux antennes connectées par un additionneur à une voie somme et par un soustracteur à une voie différence.

Soit a1(t) l'amplitude intégrée sur un temps To au moins deux fois plus petit que la durée des impulsions contenues dans le signal reçu sur la voie somme et soit a2(t) l'amplitude correspondante pour le signal de la voie différence.

Ce premier traitement qui consiste en une détection du contenu des signaux captés est effectué par un circuit d'entrée représenté en détail sur la figure 3. Le circuit d'entrée comporte deux capteurs d'entrée 1a, 1b qui sont deux antennes à fente d'un émetteur-récepteur IFF. Ces capteurs reçoivent dans un plan horizontal, c'est-à-dire en azimut, une onde dont l'angle d'incidence sur les capteurs détermine un décalage sur les instants de leurs réceptions respectives d'un même signal de longueur d'onde λ. Ils fournissent respectivement deux signaux v1(t) et v2(t) qui sont additionnés dans un additionneur 1c et soustraits dans un soustracteur 1d pour donner les voies somme et différence. Ces signaux des voies somme et différence sont, de manière classique, traités dans un détecteur d'amplitude efficace 1e, 1f suivi d'un intégrateur 1g, 1h pour fournir le signal d'information a1(t), a2(t) tel que contenu dans les voies somme et différence. Au sujet des intégrateurs 1g, 1h il est rappelé qu'ils effectuent une intégration qui, par exemple pour a1(t), s'écrit :

$$a1(t) = \frac{1}{T_0} \int_{t-T_0}^{t} |v1(x) + v2(x)| \, dx$$

où t est le temps, To une période au moins deux fois plus petite que la durée des bits d'information, c'est-à-dire des impulsions, dans le signal capté, et où |v1(x)+v2(x)| est l'amplitude de l'information en sous-porteuse sur la voie somme, c'est-à-dire également l'amplitude de l'information en bande de base sur la voie somme. Les signaux a1 et a2 sont constitués, dans l'exemple décrit, d'éléments d'une durée de 50 µs avec un en-tête E fait d'impulsions, suivi d'un train T de 16 impulsions présentes ou absentes. La figure 4 est un diagramme des temps d'un tel élément. En fait sur ce diagramme n'a pas été dessiné le bruit de fond qui accompagne les impulsions de l'élément.

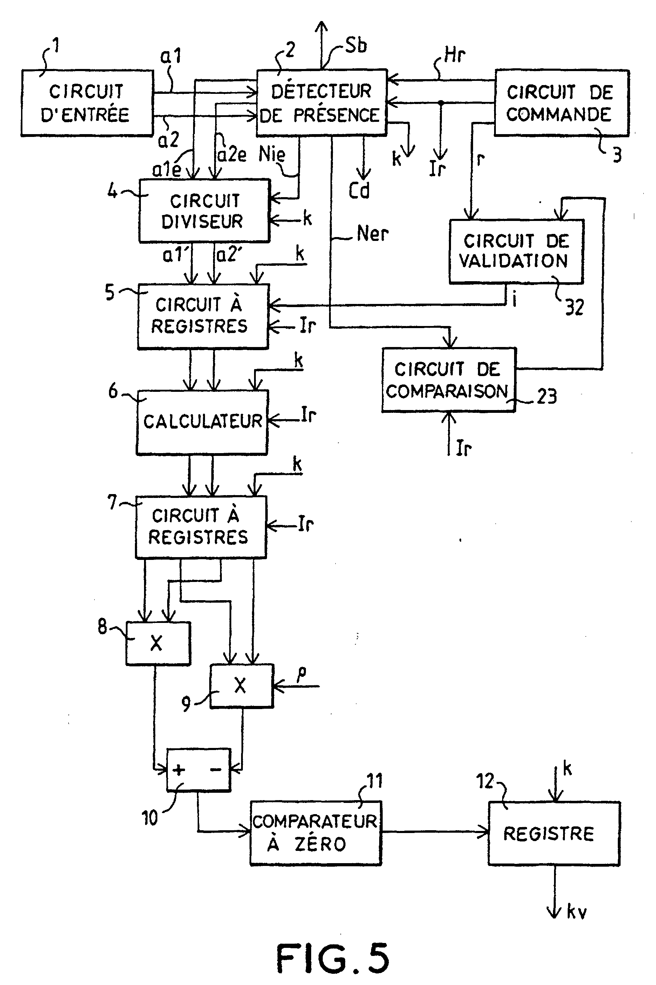

La figure 5 est une vue d'ensemble d'un dispositif de traitement des trajets multiples selon l'invention. Dans cette figure, les dispositif de synchronisation précise, relevant de la technologie courante, n'ont pas été représentés en vue de rendre le dessin plus clair et de simplifier l'exposé. Sur la figure 5 un rectangle 1 représente le circuit d'entrée qui a été décrit à l'aide de la figure 3 et qui fournit les signaux a1, a2 des voies somme et différence.

Un détecteur de présence, 2, débarrasse les signaux a1, a2 de leur bruit de fond grâce à un circuit à seuil dont la valeur de seuil évolue proportionnellement à l'amplitude des impulsions reçues. Ce circuit à seuil est un récepteur à taux de fausse alarme constant ou TFAC, connu dans la littérature anglo-saxonne sous le sigle CFAR qui correspond à Constant False Alarme Receiver. Ce type de récepteur est, en particulier, décrit au paragraphe 3, chapitre 19, tome 3 de la 3ème édition, 1994, du livre "PHYSIQUE et THEORIE du RADAR", auteur J. DARRICAU, éditeur SODIPE. Les signaux débarrassés de leur bruit de fond sont utilisés dans le détecteur de présence. Le détecteur de présence 2, en plus de son rôle d'éliminateur du bruit de fond, a plusieurs autres fonctions.

Le détecteur de présence 2 reconnaît les instants d'apparition des en-têtes des éléments dans chaque récurrence et délivre des valeurs Cd qui sont les cases distance où sont reconnus des éléments dans chaque récurrence. En fait, les valeurs Cd ne sont délivrées que pour les récurrences valables. Une récurrence est dite valable s'il n'y a pas ambiguïté quant au repérage des éléments qu'elle contient, c'est-à-dire s'il n'y a pas recouvrement au moins partiel entre deux de ses éléments, étant entendu que les impulsions de deux éléments peuvent être entrelacées sans qu'il y ait risque de recouvrement : le risque de recouvrement se comprenant en tant que risque de recouvrement total des impulsions ; ainsi dans chaque élément, l'écart entre les positions possibles pour deux impulsions successives étant de 2 µs, le risque qu'il y ait recouvrement quand deux éléments sont entrelacés est de 0,5/2 = 1/4, vu que l'échantillonnage définit des cases distance à 2,5 ms/5000 = 0,5 µs. Pour chaque valeur Cd délivrée dans une récurrence, le détecteur 2 délivre également un numéro d'ordre k=1, 2, 3 ... correspondant à l'ordre d'apparition des éléments dans chaque récurrence valable.

Une réalisation particulière des moyens de détection des instants où une présence d'élément est reconnue, est décrite dans le discriminateur de durée d'impulsion ou DDI, dont il est question au paragraphe 2.3.3 du chapitre 19 du livre déjà mentionné ci-avant.

Le détecteur de présence 2 délivre sur une sortie Sb, pour chacune des valeurs k, les valeurs numériques c'est-à-dire les bits représentés par les 16 impulsions dont il a été vu qu'elles constituaient les informations proprement dites.

Le détecteur de présence 2 compte le nombre d'impulsions par élément et le nombre d'éléments par récurrence et délivre un signal représentant le nombre $N_{ie}$ d'impulsions dans un élément d'une récurrence valable et un signal représentant le nombre $N_{er}$ d'éléments par récurrence valables ; pour les récurrences non valables $N_{ie}$ et $N_{er}$ ont la valeur 0.

Le détecteur de présence 2 comporte des circuits d'intégration pour, relativement à chaque élément d'une récurrence valable, effectuer une intégration sur la durée de l'élément c'est-à-dire pour déterminer l'énergie globale contenue dans les impulsions de l'élément considéré. Les signaux relatifs à ces niveaux d'énergie des éléments dans la voie somme et dans la voie différence sont respectivement notés $a1_e$ et $a2_e$ sur la figure 3 ; ils sont envoyés sur un circuit diviseur 4.

Un circuit de commande 3 délivre un signal d'interrogation Ir c'est-à-dire un signal de déclenchement d'une salve de 16 interrogations qui définissent les 16 récurrences dont il a été question ci-avant ; il délivre également un signal Hr qui est le signal d'échantillonnage à 4 MHz et un signal r pour chacune des 16 récurrences valables ou non, d'une salve.

Un circuit de comparaison 23, réinitialisé à chaque signal d'interrogation Ir, reçoit du détecteur 2 le signal $N_{er}$, représentatif du nombre d'éléments par récurrence valable, met en mémoire le nombre $N_{er}$ relatif à la première récurrence valable d'une salve et compare à ce nombre les nombres relatifs aux différentes récurrences valables dans la salve considérée. Si la comparaison montre qu'il y a égalité entre les deux nombres, la récurrence est validée grâce à un circuit de validation 32 qui reçoit le signal r et, comme signal de validation, le signal de sortie du circuit 23 ; le circuit 32 délivre un signal qui est le numéro d'ordre i, des récurrences valables et validées dans une salve ; il peut prendre les valeurs 1, 2, 3 ...., 16.

La suite du traitement des signaux reçus en réponse à une salve d'interrogation va consister, dans un premier temps, à estimer la dispersion des données de mesure pour les éléments portant le même numéro d'ordre dans les récurrences validées, i, d'une même salve ; puis, considérant que le premier élément d'une récurrence (k=1) est valable étant donné que, reçu le premier, il correspond à un trajet direct, le traitement consiste, dans un second temps, à le valider et à se servir de lui comme référence, en comparant les résultats de l'estimation pour les éléments d'ordre k=1 d'une salve avec les résultats pour k=2, 3, ... et cela uniquement avec les éléments pris dans les récurrences validées i; cette comparaison permet d'éliminer les éléments de même ordre k dans une salve, quand la dispersion n'est pas sensiblement équivalente à celle des éléments d'ordre k=1 et de valider ceux où la dispersion est sensiblement équivalente ; dès qu'un élément est validé par exemple, celui pour k=4, c'est ce nouvel élément validé qui sert de référence pour la comparaison avec les éléments d'ordre k=5, 6, ... et cela jusqu'à la validation éventuelle d'un nouvel élément relatif à la salve considérée.

Pour cela, un circuit diviseur 4 effectue au préalable une normalisation des niveaux d'énergie de chacun des signaux $a1_e$ et $a2_e$, de manière que ces niveaux ne soient pas tributaires du nombre d'impulsions contenues dans l'élément considéré ; cette normalisation consiste, pour chaque élément, à diviser la valeur du niveau d'énergie par le nombre d'impulsions contenues dans l'élément considéré.

Les signaux normalisés de niveau d'énergie des éléments des voies somme et différence sont notés a1' et a2' sur la figure 3.

Les valeurs normalisées sont stockées dans un circuit à registres 5 dans la mesure où elles proviennent d'éléments contenus dans des récurrences validées, i. Pour ce stockage, qui est effectué séparément pour la voie somme et pour la voie différence, à chaque salve, les différentes valeurs normalisées de niveau d'énergie correspondant à une même valeur k dans les récurrences validées, i, sont introduites dans des registres du circuit 5 et cela pour chaque valeur de k.

Soient $a_1$, $a_2$ ..., $a_n$ les valeurs des niveaux d'énergie contenus dans un des registres du circuit 5 quel qu'il soit relativement à une salve donnée ; il est à noter que n est le nombre de récurrences validées relativement à la salve donnée.

Un calculateur 6 calcule, pour chacun des registres du circuit 5, à l'occasion de chaque salve :

- la valeur moyenne du contenu du registre considéré

$$M(a_j) = \frac{1}{n} \sum_{j=1}^{n} a_j$$

- un opérateur, A, d'estimation des dispersions des niveaux d'énergie contenus dans le registre considéré ; dans l'exemple décrit cet opérateur est la variance normalisée $V(a_j)/[M(a_j)]^2$ avec

$$V(a_j) = \frac{1}{n} \left[ \sum_{j=1}^{n} (a_j)^2 \right] - \left[ M(a_j) \right]^2$$

une autre possibilité d'opérateur est l'écart type normalisé $\sigma(a_j)/M(a_j)$ avec $\sigma(a_j) = \sqrt{V(a_j)}$

ces valeurs normalisées constituent des opérateurs qui sont représentatifs des dispersions d'énergie tout en étant insensibles aux niveaux d'énergie.

Soient A1(k) et A2(k) les opérateurs, relatifs à la voie somme et à la voie différence pour un ordre k donné. L'étude des valeurs de ces opérateurs, même dans le cas où le nombre de récurrences valides est relativement faible dans une salve donnée, permet d'observer que :

- pour les trajets directes, A1(k) et A2(k) ont des valeurs relativement constantes d'un trajet direct au suivant,
- pour les trajets multiples l'un au moins des opérateurs A1(k), A2(k) atteint des valeurs nettement supérieures à celles qui sont atteintes pour les trajets directs.

La détermination des trajets multiples est basée sur cette observation : seront considérés comme provenant de trajets multiples et donc éliminés les éléments dont l'un au moins des opérateurs a une valeur supérieure à celles habituellement obtenues avec les trajets directs. Il est entendu que, comme il a été vu précédemment, le premier élément dans une référence, c'est-à-dire l'élément pour k=1, étant obtenu par voie directe, ses opérateurs A1(k=1) et A2 (k=1) peuvent servir de valeurs de référence dans une comparaison avec les opérateurs relatifs aux éléments suivants et cela jusqu'à ce que soit trouvé un nouvel élément relatif à un trajet direct c'est-à-dire dont les deux opérateurs ont des valeurs sensiblement équivalentes à celles du premier ; les valeurs des opérateurs de ce nouvel élément servent alors de référence jusqu'à ce que soit trouvé un autre élément relatif à un trajet direct et ainsi de suite jusqu'au dernier élément valide de la salve considérée.

Pour effectuer ces comparaisons différentes façons de faire sont imaginables ; si l'on considère, par exemple, les opérations A1(k=2), A2(k=2) à comparer avec les opérateurs A1(k=1), A2(k=1), il est possible :

a) de comparer séparément A1(k=2) avec A1(k=1) et A2(k=2) avec A2(k=1) et de considérer que l'élément pour k=2 a été reçu par un trajet multiple et est donc à éliminer si l'une au moins des deux inégalités ci-après est vérifiée :

$$A1(k=2) \rangle \rho . A1(k=1)$$

$$A2(k=2) \rangle \rho . A2(k=1)$$

$\rho$ est, ici et dans ce qui suit, un paramètre d'ajustement, très voisin de un ou égal à un, qui peut être déterminé par des essais successifs avec différentes valeurs de $\rho$, lors de tests du matériel ou par l'étude des valeurs obtenues pour les opérateurs A1(k), A2(k). Les valeurs de $\rho$ légèrement inférieures à 1 augmentent la sécurité du traitement en diminuant le risque de prise en compte de réponses erronées c'est-à-dire provenant de trajets multiples ; les valeurs légèrement supérieures à 1 diminuent la sécurité mais évitent que des éléments reçus par trajets directs soient éliminés ; dans le doute $\rho$ peut donc être tout simplement pris égal à 1.

b) de vérifier l'inégalité :

$$A1(k=2)+A2(k=2) \rangle \rho [A1(k=1)+A2(k=1)]$$

c) de vérifier l'inégalité :

$$A1(k=2).A2(k=2) \rangle \rho . A1(k=1).A2(k=1)$$

et d'éliminer dans les cas b) et c) ci-dessus l'élément pour k=2 si l'inégalité est vérifiée.

Cette liste de possibilités de comparaisons pour éliminer les trajets multiples n'est pas limitative, la comparaison pouvant, en particulier, se faire sur les carrés et les cubes des produits ou des sommes des opérateurs. Dans l'exemple décrit c'est la possibilité c) qui a été choisie car elle permet d'avoir un « contraste » meilleur que les possibilités a) et b), c'est-à-dire que la comparaison porte sur des valeurs plus faciles à distinguer les unes des autres. Par rapport à des comparaisons effectuées sur les carrés ou les cubes des opérateurs, la possibilité c) a l'avantage de la simplicité des calculs.

La description de la figure 5 s'était arrêtée au calculateur 6. Un circuit à registres, 7, permet de stocker les opérateurs A1(k) et A2(k) relatifs à chaque salve. Deux circuits multiplicateurs 8, 9 effectuent les produits tels que respectivement :

$$A1(k=2).A2(k=2)$$

et

$$\rho.A1(k=1).A2(k=1)$$

ou plus généralement :

$$A1(k').A2(k')$$

et

$$\rho.A1(k).A2(k)$$

où k correspond à un élément reçu par voie directe et où k' est supérieur à k.

Un circuit soustracteur 10 effectue l'opération :

$$A1(k').A2(k')-\rho.A1(k).A2(k)$$

et le résultat de la soustraction est comparé à la valeur 0 dans un comparateur à zéro 11. Si A1(k').A2(k')-ρ.A1(k).A2(k) est positif, l'élément correspondant à la valeur k' est éliminé dans un registre 12 qui reçoit sur son entrée toutes les valeurs k et délivre donc uniquement les seules valeurs $k_V$ dont le traitement considère qu'elles se rapportent à des éléments reçus par des trajets directs.

La figure 5 a été décrite sous la forme de circuits électroniques pour faciliter la compréhension des différentes étapes du procédé ; en réalité, en aval des circuits 1 et 2 selon la figure 5 tout le traitement est effectué par un micro-ordinateur spécifiquement programmé à cet effet.

L'invention n'est pas limitée à l'exemple décrit et à ses variantes susmentionnées ; en particulier, la correction peut être réalisée dans une fenêtre définie, de façon classique, en fonction des conditions de fonctionnement ; ainsi, considérant les distances minimum et maximum entre lesquelles sont susceptibles de se trouver des postes répondeurs et considérant le temps de réponse de ces postes, un élément ne sera pris en compte que, par exemple, si sa distance Cd est comprise entre 900 et 4500 dans le dispositif qui vient d'être décrit où les 16 récurrences d'une salve comportent 5000 cases distances réparties sur 2,5 ms avec, pour origine des temps d'une récurrence, l'instant d'interrogation relatif à cette récurrence. En fait, une telle fenêtre est prévue dans le matériel ayant servi à la présente description mais, comme cette fenêtre n'est pas propre à l'invention, elle n'a été ni représentée sur la figure 5, ni décrite, de manière à faciliter l'exposé de l'invention proprement dite.

De même, le traitement a été décrit en considérant deux voies de réception : somme et différence ; il peut également être mis en oeuvre avec plus de deux voies ; les traitements de chacune des voies resteront équivalents à ceux effectués sur deux voies jusqu'au circuit 7 selon la figure 5 mais, ensuite, au lieu d'effectuer par exemple, une comparaison du genre vérification de l'inégalité

$$A1(k').A2(k') \rangle \rho.A1(k).A2(k)$$

avec k' 〉 k, il faudra vérifier l'inégalité :

$$A1(k').A2(k')..... Am(k') \rangle \rho.A1(k).A2(k) ..... Am(k)$$

où m est le nombre des voies à considérer, avec m entier supérieur à 2.

Il est également à noter que, dans le cas de l'application de l'invention à un radar ou à un altimètre avec des éléments constitués chacun d'une impulsion en retour après une ou plusieurs réflexions, le détecteur de présence, tel que le détecteur 2 selon la figure 5, pourra, à partir des signaux tels que a1, a2 fournir directement les signaux a1', a2' sous la forme d'une valeur numérique de l'amplitude de chaque impulsion. En effet, le nombre $N_{ie}$ d'impulsions par élément est alors réduit à 1 si bien que le détecteur 2 n'a pas à effectuer une intégration d'énergie sur la durée de l'élément et le circuit diviseur n'a plus lieu d'être étant donné que la division serait une division par 1. Dans ce genre d'application, une récurrence sera considérée comme valable si et seulement si elle n'a pas une largeur supérieure aux impulsions d'interrogation.

**Revendications**

1. Procédé de traitement des trajets multiples dans un poste émetteur-récepteur conçu pour envoyer des salves d'interrogations récurrentes et recevoir sur n voies distinctes, avec n entier supérieur à 1, suite à une interrogation donnée, des réponses sous forme d'éléments (E-T) faits au moins d'une impulsion, pendant un laps de temps donné, dit récurrence, dont l'origine des temps est l'instant d'émission de l'interrogation donnée et dont la durée est l'intervalle de temps entre deux interrogations successives dans la salve, **caractérisé en ce que**, relativement à chaque salve, il consiste à considérer les seules récurrences où chaque élément reçu est repéré sans ambiguïté, à ne retenir (23, 32) que la première d'entre elles et, parmi les suivantes, que celles ayant le même nombre d'éléments que la première à effectuer un classement par ordre d'apparition des éléments dans les récurrences retenues, à effectuer une mesure de l'énergie de chaque élément ramenée à la durée totale des impulsions de l'élément (4), à calculer (6) une dispersion des énergies, du genre variance normalisée, sur l'ensemble des éléments de même classement et cela pour chaque voie, à comparer (10) les dispersions pour ne considérer comme valable que le premier élément du classement et, parmi les autres éléments du classement, que ceux qui ont, sur l'ensemble des n voies, des dispersions similaires à celles du premier.

2. Procédé selon la revendication 1, appliqué à un poste interrogateur IFF ayant une antenne à deux voies de réception (1a, 1b) et à des éléments comportant plus d'une impulsion, **caractérisé en ce qu'**il consiste à juger de l'ambiguité sur la possibilité de définir, lors de la réception quasi simultanée .de deux éléments, auquel de ces deux éléments appartient une impulsion donnée.

3. Procédé selon la revendication 2, **caractérisé en ce qu'**il consiste à faire le produit (8, 9) des dispersions des deux voies pour chacun des éléments de même classement et à effectuer la comparaison (10) des dispersions sur les produits ainsi obtenus.

4. Dispositif de traitement des trajets multiples dans un poste émetteur-récepteur, **caractérisé en ce qu'**il met en oeuvre le procédé selon l'une au moins des revendications précédentes.

**Patentansprüche**

1. Verfahren zur Bearbeitung von Mehrweg-Funkstrecken in einem Sender/Empfänger, der rekurrente Abfragesalven aussenden und auf n unterschiedlichen Kanälen (n ist eine ganze Zahl größer 1) nach einer erfolgten Abfrage Antworten in Form von Elementen (E-T) aus mindestens einem Impuls während einer gegebenen Zeitdauer, Rekurrenz genannt, empfangen kann, wobei der Zeitursprung der Zeitpunkt der Aussendung der gegebenen Abfrage ist und die Dauer dem Zeitintervall zwischen zwei aufeinanderfolgenden Abfragen in der Salve entspricht, **dadurch gekennzeichnet, daß** bezüglich jeder Salve das Verfahren darin besteht, nur die Rekurrenzen in Betracht zu ziehen, in denen jedes empfangene Element eindeutig erkannt wird, nur die erste dieser Rekurrenzen sowie unter den nachfolgenden nur diejenigen zu berücksichtigen, die die gleiche Anzahl von Elementen wie die erste besitzen (23, 32), eine Einordnung nach dem Rang des Auftretens der Elemente in den berücksichtigten Rekurrenzen durchzuführen, eine Messung der Energie jedes Elements bezogen auf die Gesamtdauer der Impulse dieses Elements durchzuführen (4), eine Streuung der Energiewerte nach Art einer normalisierten Varianz über die Gesamtheit der Elemente gleicher Ordnung für jeden Kanal zu berechnen (6), die Streuungen zu vergleichen (10) und nur das erste Element der Rangfolge sowie unter den weiteren Elementen nur die als gültig in Betracht zu ziehen, die für die Gesamtheit der n Kanäle ähnliche Streuungen wie die des ersten Elements besitzen.

2. Verfahren nach Anspruch 1 in Anwendung auf eine Abfragestation vom Typ Freund/Feind-Identifizierung, mit einer Antenne und zwei Empfangskanälen (1a, 1b) und für Elemente mit mehr als einem Impuls, **dadurch gekennzeichnet, daß** es darin besteht, die Mehrdeutigkeit hinsichtlich der Möglichkeit zu bewerten, ob beim praktisch gleichzeitigen Empfang zweier Elemente definiert werden kann, zu welchem der beiden Elemente ein bestimmter Impuls gehört.

3. Verfahren nach Anspruch 2, **dadurch gekennzeichnet, daß** es darin besteht, das Produkt (8, 9) der Streuwerte der beiden Kanäle für jedes der Elemente gleicher Ordnung zu bilden und den Vergleich (10) der Streuwerte anhand der erhaltenen Produkte durchzuführen.

4. Vorrichtung zur Bearbeitung von Mehrweg-Funkstrecken in einem Sender/Empfänger, **dadurch gekennzeichnet, daß** sie das Verfahren nach einem der vorstehenden Ansprüche implementiert.

**Claims**

1. Method of processing multiple paths in a transmitter-receiver station designed to send recurrent interrogations bursts and to receive on n distinct channels, n being an integer greater than 1, subsequent to a given interrogation, responses in the form of elements (E-T) made up of at least one pulse, during a given time span, a so-called recurrence, whose time origin is the instant of transmission of the given interrogation and whose duration is the interval of time between two successive interrogations in the burst, **characterized in that**, in relation to each burst, it consists in considering only those recurrences where each element received is tagged unambiguously, in retaining (23, 32) only the first of them and, from those which follow, only those having the same number of elements as the first in performing a ranking by order of appearance of the elements in the recurrences retained, in performing a measurement of each element's energy referred to the total duration of the pulses of the element (4), in calculating (6) a dispersion of the energies, of the normalized variance kind, over the set of elements of like ranking, doing so for each channel, in comparing (10) the dispersions so as to consider as valid only the first element of the ranking and, from among the other elements of the ranking, only those which have, over the set of n channels, dispersions similar to those of the first element.

2. Method according to Claim 1, applied to an IFF interrogator station having an antenna with two reception channels (1a, 1b) and with elements comprising more than one pulse, **characterized in that** it consists in assessing ambiguity on the possibility of defining, upon the quasi-simultaneous reception of two elements, to which of these two elements a given pulse belongs.

3. Method according to Claim 2, **characterized in that** it consists in forming the product (8, 9) of the dispersions of the two channels for each of the elements of like ranking and in performing the comparison (10) of the dispersions on the products thus obtained.

4. Device for processing multiple paths in a transmitter-receiver station, **characterized in that** it implements the method according to one at least of the preceding claims.

FIG.1

FIG.2a

FIG.2b

FIG.3

FIG.4

FIG.5